(19) Europäisches Patentamt

European Patent Office

Office européen des brevets

(11) **EP 0 584 660 B1**

(12) **EUROPÄISCHE PATENTSCHRIFT**

(45) Veröffentlichungstag und Bekanntmachung des Hinweises auf die Patenterteilung:
**23.10.1996  Patentblatt 1996/43**

(51) Int Cl.6: **H02M 1/12**, H01F 27/38, H02M 7/48

(21) Anmeldenummer: **93112917.5**

(22) Anmeldetag: **12.08.1993**

(54) **Verfahren und Schaltungsanordnung zur Reduktion von Oberwellen**

Method and circuit arrangement for reduction of harmonics

Méthode et dispositif de circuit pour la réduction des harmoniques

(84) Benannte Vertragsstaaten:
**AT BE CH DE DK ES FR GB GR IT LI LU NL SE**

(30) Priorität: **18.08.1992  CH 2575/92**

(43) Veröffentlichungstag der Anmeldung:
**02.03.1994  Patentblatt 1994/09**

(73) Patentinhaber:
• **Siemens Schweiz AG**
  **8047 Zürich (CH)**
  Benannte Vertragsstaaten:
  **CH LI**
• **SIEMENS AKTIENGESELLSCHAFT**
  **80333 München (DE)**
  Benannte Vertragsstaaten:
  **BE DE DK ES FR GB GR IT LU NL SE AT**

(72) Erfinder: **Gachnang, Marcel**
  **CH-8542 Wiesendangen (CH)**

(56) Entgegenhaltungen:
  **EP-A- 0 012 742          EP-A- 0 472 928**
  **DE-A- 3 810 870          US-A- 4 112 403**
  **US-A- 4 870 557**

## Beschreibung

Die vorliegende Erfindung betrifft ein Verfahren und eine Schaltungsanordnung nach dem Oberbegriff des Patentanspruchs 1 bzw. 6.

Gleichrichtereinheiten, die in Stromversorgungsanlagen eingesetzt werden, erzeugen normalerweise Oberwellenströme, die zurück an das Versorgungsnetz abgegeben werden. Oberwellenströme können ferner auch durch weitere elektrische Bauteile oder Schaltungseinheiten erzeugt werden. Die maximal zulässigen Werte für diese Oberwellenströme sind in den nationalen und internationalen Vorschriften festgelegt und dürfen durch den Verbraucher nicht überschritten werden. Angaben über Oberwellenströme sowie deren Grenzwerte für das schweizerische Stromversorgungsnetz sind z.B. in der Schweizer Norm 413600 bzw. EN 60555 (SEV 3600 bzw. SEV 3601) enthalten. Zur Einhaltung der festgelegten Grenzwerte werden die Oberwellenströme in der Praxis zumeist mittels Oberwellenfiltem, Blindstromkondensatoren und Vorschaltdrosseln reduziert. Diese Reduktion der Oberwellenströme ist vielfach jedoch ungenügend, so dass der Verbraucher zusätzlich zu einer Reduktion der Leistungsentnahme aus dem Stromversorgungsnetz gezwungen wird. Ferner sind die erwähnten Filterelemente sehr teuer.

Aus der EP-OS 0 472 928 ist eine Schaltungsanordnung zur Reduktion von Oberwellenströmen bekannt, die die Ordnungszahl n aufweisen. Die Grundlage für dieses Verfahren liefert die Tatsache, dass bei einer Phasenschiebung der Grundwelle um den Winkel a die n-te Oberwelle um den n-fachen Winkel (n*a) geschoben wird. Für bestimmte Phasenverschiebungen a lassen sich so Oberwellenströme unterdrücken. Werden z.B. Teile von n * 30° phasenverschobenen Strömen addiert, lassen sich mehrere Oberwellenströme unterdrücken. In einem Dreiphasensystem lassen sich Phasenverschiebungen von z.B. 30° mittels Stem-Dreieck-Transformatoren relativ einfach realisieren.

Zur Reduktion von Oberwellenströmen höherer Ordnung werden nach diesem bekannten Verfahren zwei Transformatoren mit einem weiteren Transformator zusammengeschaltet. Mit den ersten beiden Transformatoren werden Oberwellenströme mit den Ordnungszahlen 5, 7, 17 und 19 und mit dem dritten Transformator werden Oberwellenströme mit den Ordnungszahlen 11, 13, 23 und 25 unterdrückt. Nachteilig bei dieser Schaltungsanordnung ist, dass zur Unterdrückung von Oberwellenströmen höherer Ordnung ein zusätzlicher Transformator benötigt wird, was einen erheblichen zusätzlichen Kostenaufwand verursacht. Ferner ist die Verwendung eines zusätzlichen Transformators oft auch nicht möglich, weil nicht genügend Platz vorhanden ist.

Der vorliegenden Erfindung liegt daher die Aufgabe zugrunde, ein Verfahren und eine Schaltungsanordnung anzugeben, die eine teilweise oder vollständige Reduktion von Oberwellenströmen höherer Ordnung erlauben, ohne dass ein zusätzlicher Transformator benötigt wird.

Diese Aufgabe wird durch die im kennzeichnenden Teil des Patentanspruchs 1 bzw. 6 angegebenen Massnahmen gelöst. Vorteilhafte Ausgestaltungen der Erfindung sind in weiteren Ansprüchen angegeben.

Durch die erfindungsgemässen verfahrens- und schaltungstechnischen Massnahmen lassen sich Oberwellenströme beliebiger Ordnungszahl mit einfachen Mitteln reduzieren, die nur geringe Kosten und keinen zusätzlichen Platzbedarf verursachen.

Die Erfindung wird nachfolgend anhand einer Zeichnung beispielsweise näher erläutert. Dabei zeigt :

Fig. 1    eine bekannte Schaltungsanordnung zur Reduktion von Oberwellenströmen

Fig. 2    ein Vektordiagramm der in der bekannten Schaltungsanordnung auftretenden Spannungen

Fig. 3    eine bekannte Schaltungsanordnung zur Reduktion von Oberwellenströmen höherer Ordnung

Fig. 4    ein Teil einer erfindungsgemässen Schaltungsanordnung mit einem ersten Transformator

Fig. 5    ein Vektordiagramm der am ersten Transformator auftretenden Spannungen

Fig. 6    ein Vektordiagramm mit Spannungen für einen zum ersten Transformator komplementären zweiten Transformator

Fig. 7    eine erfindungsgemässe Schaltungsanordnung mit zwei identischen Transformatorsystemen

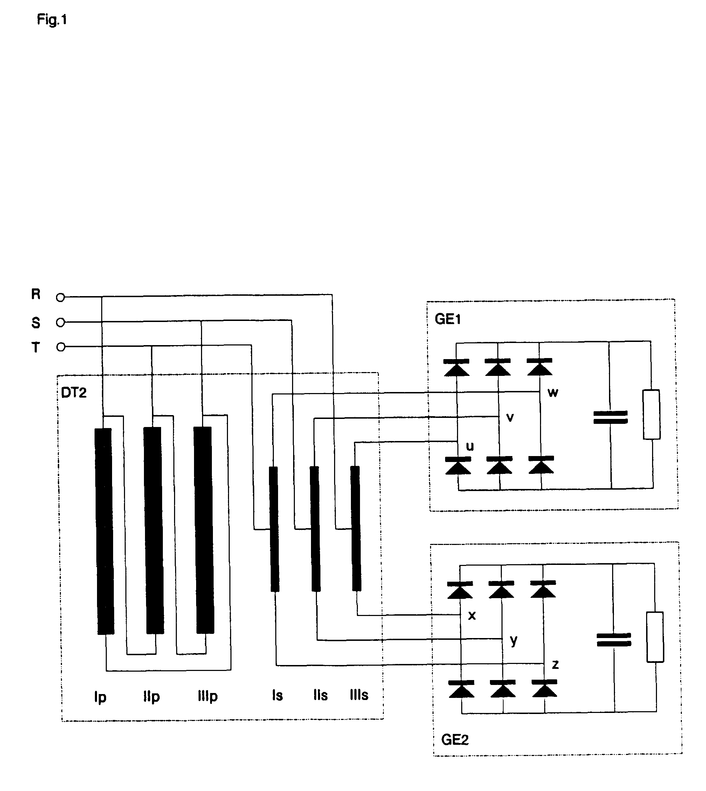

In der Schaltungsanordnung nach Fig. 1 sind Versorgungsleitungen, die eine Dreiphasen-Spannung RST führen, einerseits mit den in Dreieck geschalteten Primärwicklungen Ip, IIIp, IIp und andererseits mit den Mittelanzapfungen der Sekundärwicklungen IIIs, IIs, Is eines Drehstromtransformators DT verbunden. Durch die angegebene Beschaltung des Transformators DT ergeben sich Spannungen ux, vy, wz an den Sekundärwicklungen IIIs, IIs, Is, deren Vektoren senkrecht zu den Vektoren der Spannungen stehen, die über die Versorgungsleitungen den entsprechenden Mittelanzapfungen der Sekundärwicklungen IIIs, IIs, Is zugeführt werden. Die Enden der Sekundärwicklungen Is, IIs und IIIs sind ferner mit Gleichrichtereinheiten GE1 bzw. GE2 verbunden.

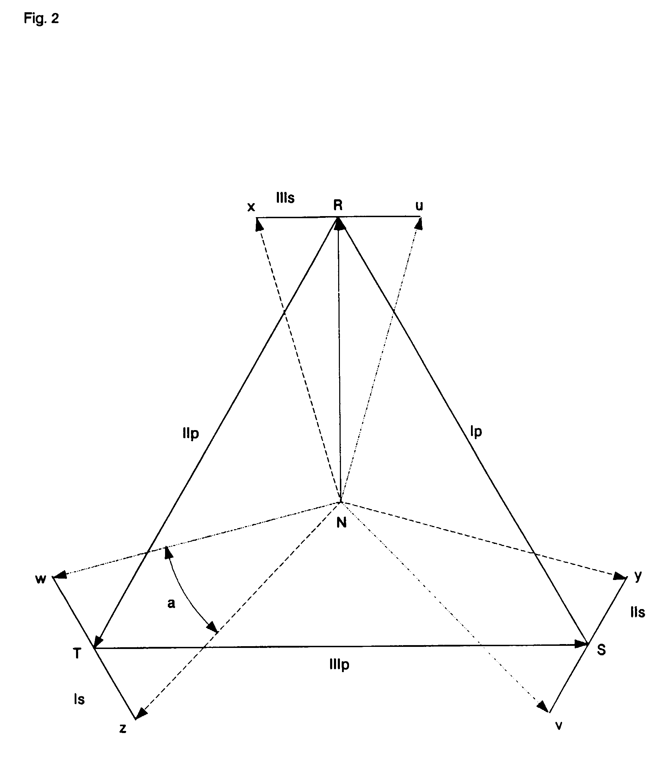

Die Vektoren der vom Transformator DT an die Gleichrichtereinheiten GE1 bzw. GE2 abgegebenen Spannungen uvw und xyz sind in Fig. 2 aufgezeichnet. Daraus ist ersichtlich, dass der Vektor der Spannung R senkrecht zum Vektor der Spannung an der Sekundärwicklung IIIs steht und mit ihm in der Mitte verbunden ist. Aus Fig. 2 ist ferner ersichtlich, dass die Vektoren der Spannungen an den Primär- und Sekundärwicklungen Ip und Is bzw. IIp und IIs bzw. IIIp und IIIs die gleiche Richtung aufweisen. Wird die Übersetzung derart gewählt, dass die an die Gleichrichtereinheiten GE1 und GE2 abgegebenen Spannungen uvw, xyz bzw. deren Grundwellen um den Winkel a, z.B. um 30° phasenverschoben sind, ergibt sich eine Addition der pulsförmigen Ströme der Gleichrichtereinheiten GE1 und GE2, bei der die Oberwellenströme mit den Ordnungszahlen 5, 7, 17 und 19 unterdrückt werden.

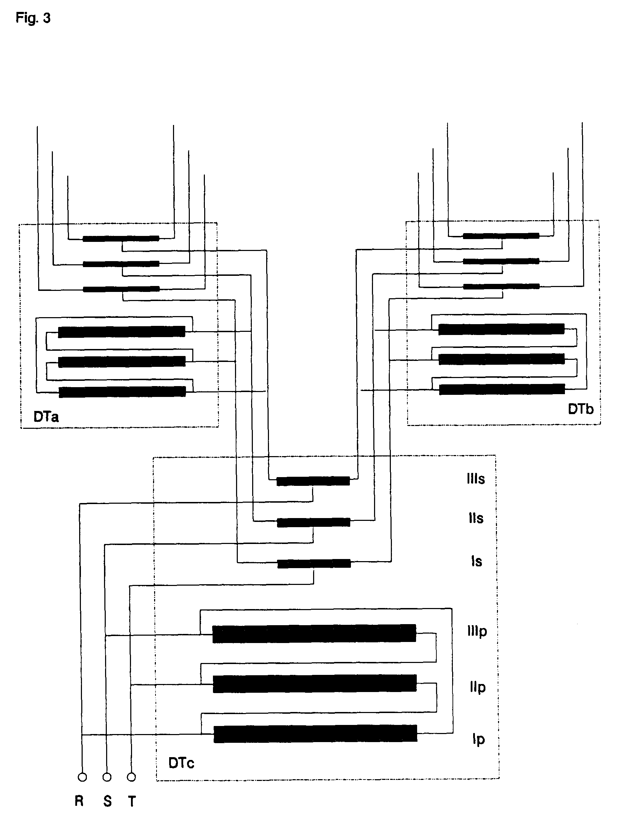

Wenn nach einer ersten Reduktion kritischer Oberwellenströme weitere Oberwellenströme unterdrückt werden sollen, so werden nach diesem bekannten Verfahren, wie z.B. in Fig. 3, gezeigt, mehrere Transformatoren DTa, DTb und DTc zusammengeschaltet. Falls durch die Verwendung der zwei Transformatoren DTa und DTb z.B. die Oberwellenströme mit den Ordnungszahlen 5, 7, 17 und 19 unterdrückt wurden, können verbleibende störende Oberwellenströme in einem weiteren Schritt nur durch Zuschaltung des Transformators DTc unterdrückt werden. Die Phasenverschiebung b der an die Transformatoren DTa und DTb durch den Transformator DTc abgegebenen Spannungen wird dann entsprechend den Ordnungszahlen der weiterhin zu reduzierenden Oberwellenströme gewählt. Für z.B. b = 15° werden die Oberwellenströme mit den Ordnungszahlen 11, 13, 23 und 25 unterdrückt.

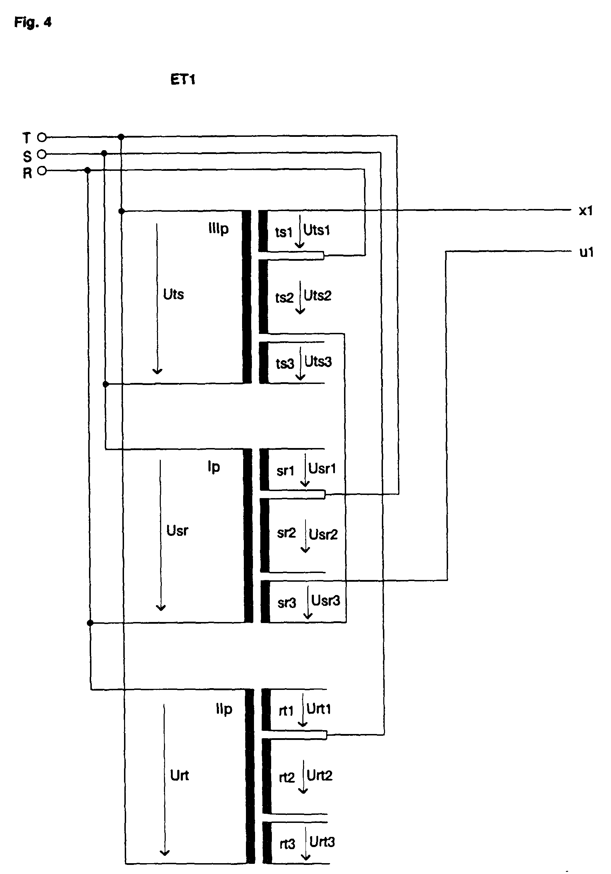

Mit der teilweise in Fig. 4 dargestellten erfindungsgemässen Schaltungsanordnung kann zur Reduktion weiterer Oberwellenströme auf einen dritten Transformator DTc verzichtet werden. Diese erfindungsgemässe Schaltungsanordnung besteht aus zwei Transformatoren ET1 und ET2, denen primär- und sekundärseitig eine Spannung RST zugeführt wird und denen je zwei Dreiphasen-Spannungen u1v1w1; x1y1z1 bzw. u2v2w2; x2y2z2 entnommen werden. Die Primärwicklungen Ip, IIp und IIIp dieser Transformatoren ET1 und ET2 sind je in Dreieck geschaltet. Die Sekundärwicklungen ts1, ts2, ts3; sr1, sr2, sr3 und rt1, rt2, rt3 sind mit der Versorgungsspannung RST derart verbunden, dass pro Phase R, S oder T zwei Wicklungsenden vorgesehen sind, an denen zwei vorzugsweise zumindest annähernd betragsgleiche phasenverschobene Spannungen u1v1w1, x1y1z1 bzw. u2v2w2; x2y2z2 abgreifbar sind. Zur übersichtlicheren Darstellung sind in Fig. 4 nur die zur Bildung der Spannungen u1 und x1 notwendigen Sekundärwicklungen verschaltet. Die Wahl der zusammenzuschaltenden Wicklungen und die Festlegung deren Windungszahlen ist weiter unten näher beschrieben.

Die beiden durch das Zusammenschalten der entsprechenden Sekundärwicklungen gebildeten Sekundärspannungen u1v1w1, x1y1z1 bzw. u2v2w2; x2y2z2 sind um einen Winkel a gegeneinander verschoben. Wie oben erwähnt werden für den Winkel a = 30° die Oberwellenströme mit den Ordnungszahlen 5, 7, 17 und 19 in den beiden Transformatoren ET1 und ET2 reduziert. Ferner ist vorgesehen, dass die Sekundärspannung u1v1w1 bzw. x1y1z1 des ersten Transformators ET1 derart gegenüber der Sekundärspannung u2v2w2 bzw. x2y2z2 des zweiten Transformators ET2 verschoben ist, dass sich zwischen diesen Spannungen u1v1w1 und u2v2w2 bzw. x1y1z1 und x2y2z2 eine Phasenverschiebung b ergibt, die vorzugsweise a/2 ist. Falls der Winkel b z.B. = 15° gewählt wird, so werden zusätzlich die Oberwellenströme mit den Ordnungszahlen 11, 13, 23 und 25 unterdrückt. Spannungen mit unterschiedlicher Phasenlage werden erzielt, indem der Spannung RST bzw. den entsprechenden drei Vektoren weitere Spannungen unterschiedlicher Phasenlage bzw. weitere Vektoren unterschiedlicher Richtung zugefügt werden. Durch das Zusammenschalten von Sekundärwicklungen unterschiedlicher Windungszahl und Phasenlage lassen sich beliebige Phasenverschiebungen einer Spannung erzielen, ohne dass sich diese betragsmässig ändert. D.h., ein vorgegebener Vektor kann mittels Vektoraddition beliebig gedreht werden. Die Beträge der Sekundärspannungen u1v1w1, x1y1z1 bzw. u2v2w2; x2y2z2 werden daher vorzugsweise gleich dem Betrag der Spannung RST gewählt. Einfachheitshalber werden die Beträge aller Sekundärspannungen u1v1w1, x1y1z1 bzw. u2v2w2; x2y2z2 jedoch auf einen zumindest annähernd gleichen Wert eingestellt, der vom Betrag der Spannung RST in noch zulässiger Weise abweicht. Dadurch wird eine optimale Unterdrückung der störenden Oberwellenströme bei gleichzeitig bescheidenem Aufwand gewährleistet. Die genaue Angleichung der Beträge aller Sekundärspannungen u1v1w1, x1y1z1 bzw. u2v2w2; x2y2z2 an den Betrag der Spannung RST ist leicht möglich, erfordert jedoch eine zusätzliche Sekundärwicklung.

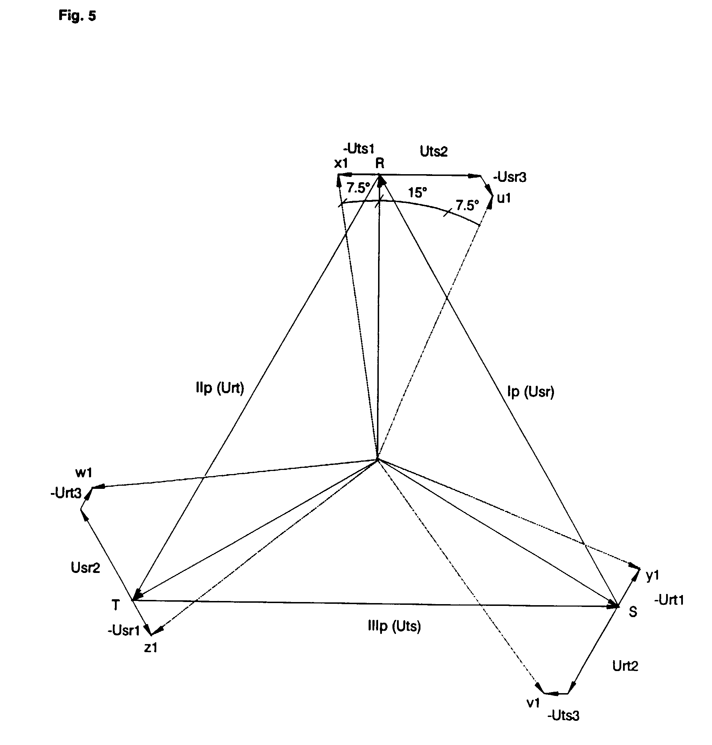

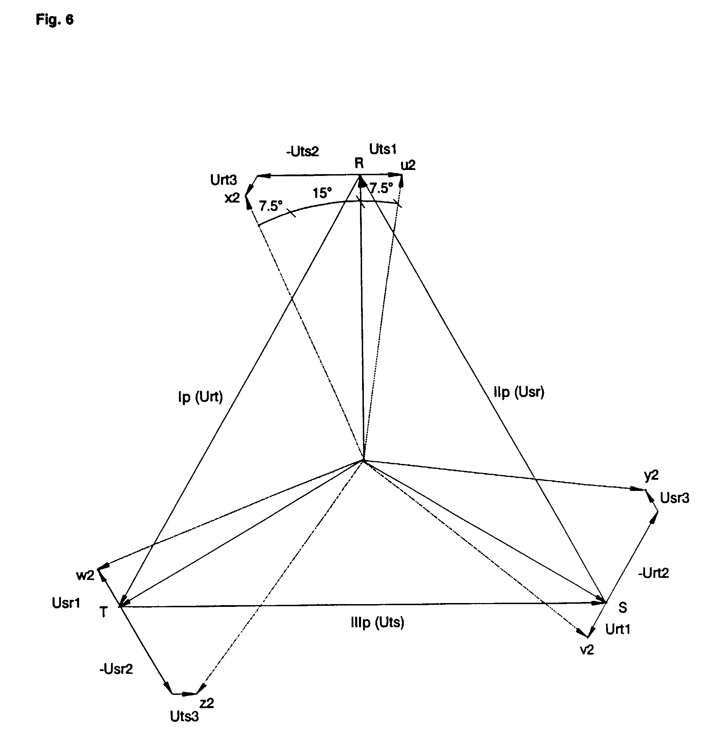

Aus Fig. 5 und 6 ist das Vektordiagramm der Spannungen der in Dreieck geschalteten Primärwicklungen Ip, IIp und IIIp ersichtlich, in dem die Spannungen Uts, Urt bzw. Usr senkrecht zu den Spannungen R, S bzw. T stehen. Aufgrund der an die Primärwicklungen Ip, IIp, IIIp angelegten Spannungen Uts, Usr und Urt entstehen an den entsprechenden Sekundärwicklungen ts, sr und rt Spannungen Uts1, Uts2, Uts3; Usr1, Usr2, Usr3 bzw. Urt1, Urt2, Urt3. Durch die Vektoraddition dieser (gruppenweise) um 120° gegeneinander phasenverschobenen Spannungen mit der Spannung R, S bzw. T, die nebst den Primärwicklungen Ip, IIp, IIIp auch den Sekundärwicklungen ts; sr; rt der Transformatoren ET1, ET2 zugeführt wird, lassen sich die Spannungen u1v1w1, x1y1z1 bzw. u2v2w2; x2y2z2 mit der geforderten Phasenverschiebung und einem gewünschten Betrag erzeugen. Z.B. durch die Addition der Vektoren R, Uts2 und -Usr3 entsteht der Vektor u1, der vom gleichen Betrag wie der Vektor x1 oder R ist und relativ zum Vektor R um 22,5° (zurück-) gedreht ist. Die gewünschten Beträge und Phasenverschiebungen a, b der Spannungen u1v1w1, x1y1z1 bzw. u2v2w2; x2y2z2 lassen sich daher durch entsprechende Vektoradditionen erzielen.

Nachfolgend wird für die komplexen Spannungen die übliche Darstellungsform $\underline{U} = U * e^{jk}$ verwendet. $\underline{U}$ ist eine komplexe Spannung, U ist der Betrag dieser Spannung und k bestimmt deren Phasenwinkel. Die erforderlichen Längen der zu addierenden Vektoren bzw. die erforderlichen Beträge der an den Sekundärwicklungen ts, sr, rt auftretenden Spannungen, die aufgrund der primärseitigen Dreieckschaltung gegenüber der Spannung $\underline{R} = R^* e^{j0°}$ um +/- 30°, 90°, 150°, 210°, oder 330° phasenverschoben sind, lässt sich einfach berechnen wie dies am Beispiel der Spannung $\underline{u1}$ nachfolgend gezeigt wird. Die komplexe Spannung $\underline{u1}$, die einen Phasenwinkel (p*a) aufweist, entsteht durch die vorzeichenrichtige Addition der komplexen Spannung $\underline{R}$, $\underline{Uts2}$ und $\underline{Usr3}$ :

$$\underline{u1} = \underline{R} + \underline{Uts2} - \underline{Usr3} \qquad \text{bzw.}$$

$$u1 * e^{-j(p^*a)} = R^* e^{j0°} + Uts2 * e^{-j90°} - Usr * e^{j30°}$$

Am Beispiel der Sekundärspannungen $\underline{x1}$ und $\underline{u1}$ wird nachfolgend beschrieben, wie bei der Bemessung der entsprechenden Sekundärwicklungen ts bzw. ts und sr am einfachsten vorzugehen ist. Die Sekundärwicklung ts1 wird derart bemessen, dass durch die Addition der daran auftretenden Spannung $-Uts1$ mit der Spannung $\underline{R}$ die Spannung $\underline{x1}$ entsteht, die der Spannung $\underline{R}$ um 7,5° vorauseilt. Da die Spannungen $\underline{x1}$ und $\underline{R}$ nur um wenige Grad phasenverschoben sind, ist der Betrag der Spannung $\underline{x1}$ nur minimal grösser als der Betrag der Spannung $\underline{R}$. Obwohl sich die Betrage der Spannungen durch die Addition mit einer weiteren phasenveschobenen Spannung $(\underline{Urt})$ angleichen liessen, wird aufgrund der minimalen Differenz zwischen den Beträgen vorzugsweise auf eine weitere Korrektur verzichtet. Die Spannung $\underline{u1}$, die um -22,5° gegenüber der Spannung $\underline{R}$ phasenverschoben sein soll, kann auf gleiche Weise wie die Spannung $\underline{x1}$, nämlich durch die Addition der Spannung $\underline{R}$ mit der an der Sekundärwicklung ts2 auftretenden Spannung $\underline{Uts2}$ erzeugt werden. Durch die relativ grosse Phasenverschiebung von 22,5° ergeben sich dabei jedoch spürbare Abweichungen zwischen den Beträgen der Spannungen $\underline{R}$ bzw. $\underline{x1}$ und $\underline{u1}$. Durch die Addition mit einer weiteren Spannung $-Usr3$ wird daher die Übereinstimmung der Beträge der Spannungen $\underline{x1}$ und $\underline{u1}$ angestrebt. D.h., der Betrag der Spannung $\underline{u1}$ wird vorzugsweise gleich dem Betrag der Spannung $\underline{x1}$ gewählt.

Als besonders vorteilhaft haben sich die in Fig. 5 und 6 für die Transformatoren ET1 und ET2 gewählten Phasenverschiebungen von a = 30° und b = 15° erwiesen. Die auf die oben beschriebene Weise durch Vektoraddition gebildeten Spannungen u1v1w1, x1y1z1 bzw. u2v2w2, x2y2z2 sind relativ zur Spannung RST um die Phasenwinkel q*a bzw. p*a derart vor- bzw. zurückverschoben, dass zwischen den Spannungen u1v1w1 und x1y1z1 bzw. u2v2w2 und x2y2z2 der Phasenwinkel q*a + p*a = (q + p) * a = a und zwischen den Spannungen x1y1z1 und x2y2z2 bzw. u1v1w1, und u2v2w2 der Phasenwinkel b (b = 2*p*a) auftritt. In Fig. 5 und 6 sind die Spannungen x2y2z2 und x1y1z1 um 0,75 * 30° bzw. 0,25 * 30° gegenüber der Spannung RST vor- und die Spannungen u1v1w1 und u2v2w2 um 0,75 * 30° bzw. 0,25 * 30° gegenüber der Spannung RST zurückverschoben. Durch das Übereinanderlegen der in Fig. 5 und 6 gezeigten Vektordiagramme lässt sich dieser Sachverhalt überprüfen.

Vorteilhaft ist insbesondere, dass sich die in Fig. 5 und 6 gezeigten Phasenverschiebungen mit nur wenigen Sekundärwicklungen und zwei identischen Transformatoren ET1 und ET2 erreichen lassen. In Fig. 4 ist der Transformator ET1 gezeigt, der pro Phase eine Primärwicklung Ip, IIp bzw. IIIp und drei Sekundärwicklungen ts1, ts2, ts3 bzw. sr1, sr2, sr3 bzw. rt1, rt2, rt3 aufweist. Von den Sekundärwicklungen ts1, ts2, ts3; sr1, sr2, sr3; rt1, rt2, rt3 sind zum Zweck der übersichtlicheren Darstellung nur die zur Erzeugung der Spannungen $\underline{x1}$ und $\underline{u1}$ notwendigen Wicklungen ts1, ts2 und sr3 verschaltet. Dabei ist dargestellt wie die Primär- und Sekundärwicklungen zu beschalten sind, damit die gewünschte Phasenverschiebung zwischen den Spannungen $\underline{x1}$ bzw. $\underline{u1}$ und $\underline{R}$ eintritt. Die Primärwicklungen Ip, IIp und IIIp sind in Dreieck geschaltet. Die Anschlüsse der Primärwicklung IIIp werden mit den Spannungen $\underline{S}$ und $\underline{T}$ verbunden, wodurch in den zugehörigen Sekundärwicklungen ts1, ts2 und ts3 die Spannungen $\underline{Uts1}$, $\underline{Uts2}$ und $\underline{Uts3}$ induziert werden, die senkrecht zur Spannung $\underline{R}$ stehen, die einem gemeinsamen Abgriff der Wicklungen ts1 und ts2 zugeführt wird. Die Spannung $\underline{x1}$ wird dabei durch die Addition der Spannungen $\underline{R}$ und $-Uts1$ gebildet. Die Spannung $\underline{u1}$ ergibt sich durch die Addition der Spannungen $\underline{R}$, $\underline{Uts2}$ und $-Usr3$.

Die in den Figuren 5 und 6 gezeigten Diagramme gehen durch die Spiegelung an einer Achse ineinander über, die entlang dem Vektor R, S oder T verläuft. Diese Spiegelung lässt sich einfach durch Vertauschen der Phasen S und T erzielen. Erfindungsgemäss lassen sich daher zwei identisch beschaltete Transformatoren ET verwenden. Dem ersten Transformator wird dabei die Spannung RST und dem zweiten Transformator die Spannung RTS zugeführt, bei der im Vergleich zur Spannung RST zwei Phasen (RS, ST oder TS) vertauscht sind.

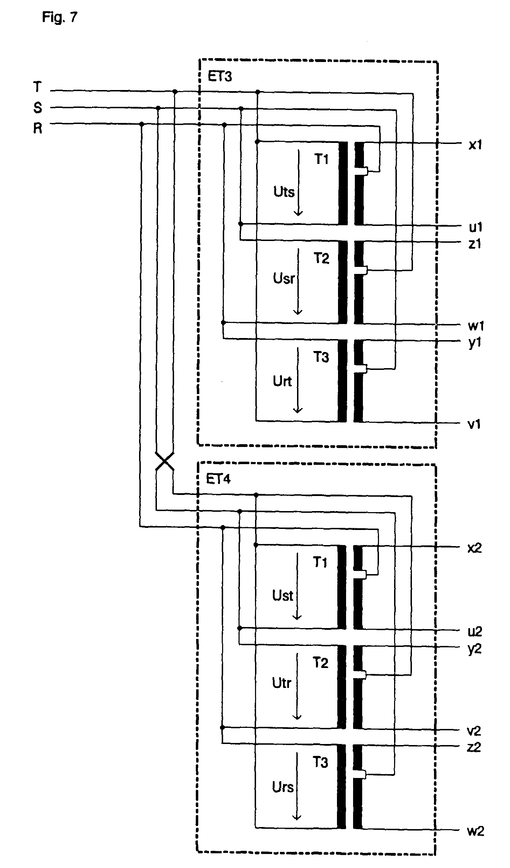

In Fig. 7 ist eine vereinfachte Schaltungsanordnung mit zwei identischen Transformatorsystemen ET3 und ET4 gezeigt, die pro Phase je einen einzelnen Transformator T1, T2 bzw. T3 aufweisen. Selbstverständlich können jedoch auch in diesem Fall zwei identische Drei-Phasen-Transformatoren verwendet werden. Da in dieser vereinfachten Schaltungsanordnung auf einen betragsmässigen Abgleich der Sekundärspannungen u1v1w1; x1y1z1; u2v2w2; x2y2z2 verzichtet wird, sind nur zwei Sekundärwicklungen unterschiedlicher Windungszahl pro Transformator T erforderlich. Durch die entsprechende Wahl der Windungszahl der Sekundärwicklungen treten wiederum die gewünschten Phasenverschiebungen zwischen den Spannungen u1v1w1, x1y1z1 bzw. u2v2w2, x2y2z2 auf. Die Unterdrückung der Oberwellenströme ist in diesem Fall nicht optimal, aber für verschiedene Anwendungsfälle genügend. Um die gewünschten gegenseitigen Phasenverschiebungen aller Sekundärspannungen u1v1w1, x1y1z1 bzw. u2v2w2, x2y2z2 für diese zwei identischen Transformatoren ET3, ET4 zu erreichen, wird vorgesehen, dass die in den primärseitigen Dreieckschaltungen der Transformatoren ET3, ET4 entstehenden Spannungen <u>Uts</u>, <u>Usr</u>, <u>Urt</u> bzw. <u>Ust</u>, <u>Utr</u>, <u>Urs</u> einen gegenläufigen Umlaufsinn aufweisen. Dies wird auf einfache Weise erreicht, indem zwei Phasen der z.B. dem Transformator ET4 zugeführten Versorgungsspannung vertauscht werden.

**Patentansprüche**

1. Verfahren zur Reduktion von Oberwellenströmen, die von einem ersten sowie einem zweiten Transformator (ET1; ET2) an Versorgungsleitungen abgegeben werden, **dadurch gekennzeichnet**, dass an den Sekundärwicklungen der beiden Transformatoren (ET1, ET2) je eine erste und eine zweite um den Phasenwinkel a gegeneinander verschobene Dreiphasen-Spannung (u1v1w1, x1y1z1) bzw. (u2v , x2y2z2) abgegeben werden, deren Phasenlagen ferner derart gewählt werden, dass die erste und zweite vom ersten Transformator (ET1) abgegebenen Dreiphasen-Spannungen (u1v1w1; x1y1z1) um den Phasenwinkel b gegenüber der ersten und zweiten vom zweiten Transformator (ET2) abgegebenen Dreiphasen-Spannungen (u2v2w2, x2y2z2) verschoben ist und dass die Phasenwinkel a und b entsprechend den Ordnungszahlen der zu reduzierenden Oberwellenströme gewählt werden.

2. Verfahren nach Anspruch 1, **dadurch gekennzeichnet**, dass die Phasenlagen der vier von den beiden Transformatoren (ET1, ET2) abgegebenen Dreiphasen-Spannungen (u1v1w1, x1y1z1; u2v2w2, x2y2z2) derart gewählt werden, dass die beiden vom ersten Transformator (ET1) abgegebenen Dreiphasen-Spannungen (u1v1w1; x1y1z1) gegenüber der Dreiphasen-Versorgungsspannung (RST) um denselben Betrag vor- bzw. nacheilen wie die beiden vom zweiten Transformator (ET2) abgegebenen Dreiphasen-Spannungen (u2v2w2, x2y2z2) gegenüber der Dreiphasen-Versorgungsspannung (RST) nach- bzw. voreilen.

3. Verfahren nach Anspruch 1 oder 2, **dadurch gekennzeichnet**, dass zur Erzeugung der einzelnen Dreiphasen-Spannungen (u1v1w1, ..., x2y2z2) je mindestens eine, vorzugsweise aber zwei Sekundärwicklungen der Transformatoren (ET1, ET2) derart gewählt und mit einer Phase (R, S oder T) der Dreiphasen-Versorgungsspannung (RST) zusammengeschaltet werden, dass zumindest annähemd betragsgleiche Dreiphasen-Spannungen (u1v1w1, x1y1z1, u2v2w2, x2y2z2) entstehen.

4. Verfahren nach Anspruch 3, **dadurch gekennzeichnet**, dass die Sekundärwicklungen der Transformatoren (ET1, ET2) derart gewählt und zusammengeschaltet werden, dass die Dreiphasen-Spannungen (u1v1w1, x1y1z1, u2v2w2, x2y2z2) je einen vorgewählten Betrag annehmen, wobei deren gegenseitige Verschiebung um die Phasenwinkel a, b erhalten bleibt.

5. Verfahren nach einem der Ansprüche 1 - 4, **dadurch gekennzeichnet**, dass der Phasenwinkel a zumindest annähemd 30° und der Phasenwinkel b zumindest annähemd 15° beträgt.

6. Schaltungsanordnung zur Durchführung des Verfahrens nach Anspruch 1, **dadurch gekennzeichnet**, dass zwei Drehstromtransformatoren (ET1, ET2) mit in Dreieck geschalteten Primärwicklungen und mit mindestens zwei Sekundärwicklungen pro Phase vorgesehen sind, dass die die Dreiphasen-Versorgungsspannung (RST) führenden Versorgungsleitungen primärseitig mit den in Dreieck geschalteten Primärwicklungen (Ip, IIp, IIIp) und sekundärseitig je mit zwei Sekundärwicklungen (ts1, ts2; sr1, sr2; rt1, rt2) derart verbunden sind, dass die Dreiphasen-Versorgungsspannung (RST) senkrecht zu den an diesen Sekundärwicklungen (ts1, ts2; sr1, sr2; rt1, rt2) anliegenden Dreiphasen-Spannungen steht und dass die Sekundärwicklungen (ts1, ts2; sr1, sr2; rt1, rt2, der beiden Transformatoren (ET1, ET2) derart gewählt sind, dass daran je eine erste und eine zweite um den Phasenwinkel a gegeneinander verschobene Dreiphasen-Spannung (u1v1w1, x1y1z1) bzw. (u2v2w2, x2y2z2) abgegeben werden, deren Phasenlagen ferner derart gewählt sind, dass die erste und zweite vom ersten Transformator (ET1) abgegebenen Dreiphasen-Spannungen (u1v1w1; x1y1z1) um den Phasenwinkel b gegenüber der ersten und zweiten vom zweiten Transformator (ET2) abgegebenen Dreiphasen-Spannungen (u2v2w2, x2y2z2) verschoben ist und dass die Phasenwinkel a und b entsprechend den Ordnungszahlen der zu reduzierenden Oberwellenströme gewählt sind.

7. Schaltungsanordnung nach Anspruch 6, **dadurch gekennzeichnet**, dass wenigstens eine der Sekundärwicklungen (ts2; sr2; rt2) der beiden Transformatoren (ET1, ET2) mit wenigstens einer weiteren Sekundärwicklung (ts3; sr3; rt3) zusammengeschaltet ist, deren Windungszahl und Phasenzugehörigkeit entsprechend den vorgesehenen Amplituden der Dreiphasen-Spannungen (u1v1w1, x1y1z1, u2v2w2, x2y2z2) gewählt ist, wobei deren gegenseitige Verschiebung um die Phasenwinkel a bzw. b erhalten bleibt.

8. Schaltungsanordnung nach Anspruch 6 oder 7, **da-**

**durch gekennzeichnet**, dass die Transformatoren (ET1, ET2) identische Primär- und Sekundärwicklungen aufweisen.

9. Schaltungsanordnung nach Anspruch 6, 7 oder 8, **dadurch gekennzeichnet**, dass die die Dreiphasen-Spannungen (u1v1w1, x1y1z1, u2v2w2, x2y2z2) führenden Sekundärwicklungen (ts1, ts2; sr1, sr2; rt1, rt2) bzw. (ts1, ts2, sr3; sr1, sr2, rt3; rt1, rt2, ts3) mit Gleichrichtereinheiten oder mit weiteren Elementen verbunden sind, die Oberwellenströme erzeugen.

10. Schaltungsanordnung nach einem der vorhergehenden Ansprüche 6 bis 9, **dadurch gekennzeichnet**, dass die Transformatoren (ET1, ET2) identisch beschaltet sind und dass zwei Phasen der Dreiphasen-Versorgungsspannung (RST) bei einem dieser Transformatoren (ET1, ET2) vertauscht angeschlossen sind.

11. Schaltungsanordnung nach einem der vorhergehenden Ansprüche 6 bis 10, **dadurch gekennzeichnet**, dass die Transformatoren (ET1, ET2) je aus drei einzelnen Transformatoren bestehen, denen die Phasen (TS; SR; RT) zugeführt werden.

12. Schaltungsanordnung nach einem der vorhergehenden Ansprüche 6 bis 11, **dadurch gekennzeichnet**, dass der Phasenwinkel a zumindest annähemd 30° und der Phasenwinkel b zumindest annähemd 15° beträgt.

## Claims

1. Method for reducing harmonic currents which are supplied by a first and a second transformer (ET1; ET2) to supply lines, characterized in that at the secondary windings of the two transformers (ET1, ET2) a first and a second three-phase voltage (u1v1w1, x1y1z1) and (u2v2w2, x2y2z2), displaced against each other by the phase angle **a**, are respectively supplied, the phase angles of which, moreover, are selected in such a way that the first and the second three-phase voltages (u1v1w1; x1y1z1) supplied by the first transformer (ET1) are displaced by the phase angle **b** in relation to the first and second three-phase voltages (u2v2w2, x2y2z2) supplied by the second transformer (ET2) and in that the phase angles **a** and **b** are selected according to the ordinal numbers of the harmonic currents to be reduced.

2. Method according to claim 1, characterized in that the phase angles of the four three-phase voltages (u1v1w1, x1y1z1; u2v2w2, x2y2z2) supplied by the two transformers (ET1, ET2) are selected in such a way that the two three-phase voltages (u1v1w1; x1y1z1) supplied by the first transformer (ET1) lead and lag behind by the same amount, in relation to the three-phase supply voltage (RST), as the two three-phase voltages (u2v2w2, x2y2z2) supplied by the second transformer (ET2) lead and lag behind in relation to the three-phase supply voltage (RST).

3. Method according to claim 1 or 2, characterized in that to generate the individual three-phase voltages (u1v1w1, ..., x2y2z2) at least one, but preferably two, secondary windings of the transformers (ET1, ET2) are selected respectively and are connected to a phase (R, S or T) of the three-phase supply voltage (RST) in such a way that three-phase voltages (u1v1w1, x1y1z1, u2v2w2, x2y2z2) which are at least approximately the same in magnitude arise.

4. Method according to claim 3, characterized in that the secondary windings of the transformers (ET1, ET2) are selected and interconnected in such a way that the three-phase voltages (u1v1w1, x1y1z1, u2v2w2, x2y2z2) respectively assume a preselected magnitude, wherein their mutual displacement by the phase angles **a**, **b** is maintained.

5. Method according to one of claims 1 to 4, characterized in that the phase angle **a** amounts to at least approximately 30° and the phase angle **b** amounts to at least approximately 15°.

6. Circuit arrangement for carrying out the method according to claim 1, characterized in that two three-phase transformers (ET1, ET2) with delta-connected primary windings and with at least two secondary windings per phase are provided, in that the supply lines carrying the three-phase supply voltage (RST) are connected on the primary side to the delta-connected primary windings (Ip, IIp, IIIp) and on the secondary side respectively to two secondary windings (ts1, ts2; sr1, sr2; rt1, rt2) in such a way that the three-phase supply voltage (RST) is perpendicular to the three-phase voltages applied to these secondary windings (ts1, ts2; sr1, sr2; rt1, rt2) and in that the secondary windings (ts1, ts2; sr1, sr2; rt1, rt2) of the two transformers (ET1, ET2) are selected in such a way that respectively a first and a second three-phase voltage (u1v1w1, x1y1z1) and (u2v2w2, x2y2z2), displaced against each other by the phase angle **a**, are supplied thereto, the phase angles of which three-phase voltages, moreover, are selected in such a way that the first and second three-phase voltages (u1v1w1; x1y1z1) supplied by the first transformer (ET1) are displaced by the phase angle **b** relative to the first and second three-phase voltages (u2v2w2, x2y2z2) supplied by the second transformer (ET2) and in that the phase angles **a** and **b** are selected corresponding to the ordinal numbers of the harmonic currents to be reduced.

7. Circuit arrangement according to claim 6, characterized in that at least one of the secondary windings (ts2; sr2; rt2) of the two transformers (ET1, ET2) is connected to at least one additional secondary winding (ts3; sr3; rt3), the turn number and phase association of which are selected according to the provided amplitudes of the three-phase voltages (u1v1w1, x1y1z1, u2v2w2, x2y2z2), wherein their mutual displacement by the phase angles **a** and **b** is maintained.

8. Circuit arrangement according to claim 6 or 7, characterized in that the transformers (ET1, ET2) have identical primary and secondary windings.

9. Circuit arrangement according to claim 6, 7 or 8, characterized in that the secondary windings (ts1, ts2; sr1, sr2; rt1, rt2) or (ts1, ts2, sr3; sr1, sr2, rt3; rt1, rt2, ts3) carrying the three-phase voltages (u1v1w1, x1y1z1, u2v2w2, x2y2z2) are connected to rectifier units or to additional elements which generate harmonic currents.

10. Circuit arrangement according to one of the preceding claims 6 to 9, characterized in that the transformers (ET1, ET2) are wired identically and in that two phases of the three-phase supply voltage (RST) are connected in a reversed manner with one of these transformers (ET1, ET2).

11. Circuit arrangement according to one of the preceding claims 6 to 10, characterized in that the transformers (ET1, ET2) comprise three individual transformers, to which the phases (TS;SR;RT) are respectively supplied.

12. Circuit arrangement according to one of the preceding claims 6 to 11, characterized in that the phase angle **a** amounts to at least approximately 30° and the phase angle **b** amounts to at least approximately 15°.

**Revendications**

1. Procédé de réduction de courants d'harmoniques, qui sont fournis par un premier ainsi qu'un second transformateurs (ET1;ET2) à des conducteurs d'alimentation, **caractérisé en ce que** l'on fournit, aux enroulements secondaires des deux transformateurs (ET1, ET2), des première et seconde tensions triphasées (u1v1w1, x1y1z1) respectivement (u2v2w2, x2y2z2), qui sont déphasées l'une par rapport à l'autre de l'angle a de phase et dont on choisit de plus les positions de phase, de manière que les première et seconde tensions triphasées (u1v1w1; x1y1z1) fournies par le premier transformateur (ET1) soient déphasées de l'angle b de phase par rapport aux première et seconde tensions triphasées (u2v2w2, x2y2z2) fournies par le second transformateur (ET2), et que l'on choisit les angles a et b de phase en fonction des rangs des courants d'harmoniques à réduire.

2. Procédé suivant la revendication 1, **caractérisé en ce qu'**on choisit les positions de phase des quatre tensions triphasés (u1v1w1, x1y1z1; u2v2w2, x2y2z2) fournies par les deux transformateurs (ET1,ET2), de manière que les deux tensions triphasées (u1v1w1, x1y1z1) fournies par le premier transformateur (ET1) soient en avance ou en d'alimentation triphasée, du même module que le module dont les deux tensions triphasées (u2v2w2, x2y2z2) fournies par le second transformateur (ET2) sont en retard de phase ou en avance de phase par rapport à la tension d'alimentation triphasée (RST).

3. Procédé suivant la revendication 1 ou 2, **caractérisé en ce que** l'on choisit, pour la production des diverses tensions triphasées (u1v1w1, ..., x2y2z2) pour chacune au moins un, mais de préférence, deux enroulements secondaires des transformateurs secondaires (ET1, ET2) et on les interconnecte à une phase (R, S ou T) de la tension (RST) d'alimentation triphasée, de manière à obtenir des tensions triphasées (u1v1w1, x1y1z1, u2v2w2, x2y2z2) de modules au moins approximativement égaux.

4. Procédé suivant la revendication 3, **caractérisé en ce que** l'on choisit les enroulements secondaires des transformateurs (ET1,ET2) et on les interconnecte, de manière que les tensions triphasées (u1v1w1, x1y1z1, u2v2w2, x2y2z2) prennent chacune un module choisi au préalable, leur déphasage réciproque de l'angle a, b de phase étant conservé.

5. Procédé suivant l'une des revendications 1 à 4, **caractérisé en ce que** l'angle a de phase est d'au moins approximativement 30° et l'angle b de phase est d'au moins approximativement 15°.

6. Montage pour la mise en oeuvre du procédé suivant la revendication 1, **caractérisé en ce qu'**il est prévu deux transformateurs triphasés (ET1, ET2), dont les enroulements primaires sont branchés en triangle et qui comportent au moins deux enroulements secondaires par phase, les conducteurs d'alimentation conduisant la tension (RST) d'alimentation triphasée sont reliés côté primaire aux enroulements primaires branchés en triangle (Ip, IIp, IIIp) et côté secondaire chacun à deux enroulements secondaires (ts1, ts2; sr1, sr2; rt1, rt2), de manière que la tension (RST) d'alimentation triphasée soit perpendiculaire aux tensions triphasées appliquées à ces enroulements secondaires (ts1, ts2; sr1, sr2; rt1, rt2) et les enroulements secondaires (ts1, ts2; sr1, sr2; rt1, rt2) des deux transformateurs (ET1, ET2) sont choisis de manière que soient fournies à leurs bornes des première et seconde tensions (u1v1w1, x1y1z1) respectivement (u2v2w2, x2y2z2) triphasées, qui sont décalées l'une par rapport à l'autre de l'angle a de phase et dont les positions de phase sont de plus choisies de manière que les première et seconde tensions triphasées (u1v1w1, x1y1z1) fournies par le premier transformateur (ET1) soient déphasées de l'angle b de phase par rapport aux première et seconde tensions triphasées (u2v2w2, x2y2z2) fournies par le second transformateur (ET2) et les angles a et b de phase sont choisis en fonction des rangs des courants d'harmoniques à réduire.

7. Montage suivant la revendication 6, **caractérisé en ce qu'**au moins l'un des enroulements secondaires (ts2; sr2; rt2) des deux transformateurs (ET1, ET2) est interconnecté à au moins un enroulement secondaire supplémentaire (ts3; sr3; tr3), dont le nombre de spires et la correspondance des phases sont choisis en fonction des amplitudes prévues des tensions triphasées (u1v1w1, x1y1z1, u2v2w2, x2y2z2), leur déphasage réciproque de l'angle a respectivement b de phase étant conservé.

8. Montage suivant la revendication 6 ou 7, **caractérisé en ce que** les transformateurs (ET1, ET2) comportent des enroulements primaire et secondaire identiques.

9. Montage suivant la revendication 6, 7 ou 8, **caractérisé en ce que** les enroulements secondaires (ts1, ts2; sr1, sr2; rt1, rt2) respectivement (ts1, ts2, sr3; sr1, sr2, rt3; rt1, rt2, ts3) conduisant les tensions triphasées (u1v1w1, x1y1z1, u2v2w2, x2y2z2) sont reliés à des unités de redresseur ou à d'autres éléments, qui produisent des courants d'harmoniques.

10. Montage suivant l'une des revendications précédentes 6 à 9, **caractérisé en ce que** les transformateurs (ET1, ET2) sont branchés de la même manière et que deux phases de la tension (RST) d'alimentation triphasée sont connectées en étant permutées dans l'un de ces transformateurs (ET1, ET2).

11. Montage suivant l'une des revendications précédentes 6 à 10, **caractérisé en ce que** les transformateurs (ET1, ET2) sont constitués chacun de trois transformateurs distincts, auxquels sont envoyées les phases (TS; SR; RT).

12. Montage suivant l'une des revendications précédentes 6 à 11, **caractérisé en ce que** l'angle a de phase est d'au moins approximativement 30° et l'angle b de phase est d'au moins approximativement 15°.

Fig.1

Fig. 2

EP 0 584 660 B1

Fig. 3

DTa

DTb

IIIs

IIs

Is

IIIp

IIp

Ip

DTc

R  S  T

**Fig. 4**

ET1

**Fig. 5**

**Fig. 6**

**Fig. 7**